# EUROPÄISCHE PATENTANMELDUNG

(11) **EP 3 608 136 A1**
(43) Veröffentlichungstag der Anmeldung: **12.02.2020**
(21) Anmeldenummer: 19190492.9
(22) Anmeldetag: 07.08.2019
(51) Int. Cl.: B60K 1/00, H02K 16/02, B60K 7/00

(54) **ELEKTRISCHE MASCHINE FÜR EINEN TRAKTIONSANTRIEB UND VERFAHREN ZUM BETREIBEN EINER ELEKTRISCHEN MASCHINE**

(30) Priorität: 09.08.2018 DE 102018213391
(71) Anmelder: Robert Bosch GmbH, 70442 Stuttgart (DE)
(72) Erfinder: Wessner, Jochen, 73728 Esslingen (DE)

(57) **Zusammenfassung**

Die vorliegende Erfindung schafft eine elektrische Maschine (1) für einen Traktionsantrieb (TA) mit einem Gehäuse (G), umfassend einen Stator (S) mit einem Innenbereich (IB), in welchem ein Statormagnetfeld (B) erzeugbar ist; einen ersten Rotor (R1), welcher im Innenbereich (IB) angeordnet ist und über welchen ein erstes Antriebsrad (Rd1) antreibbar ist, wobei der erste Rotor (R1) eine erste Magnetspuleneinrichtung (MS1) umfasst, mittels welcher ein erstes Rotormagnetfeld (B1) erzeugbar ist, welches an das Statormagnetfeld (B) ankoppelnd ausgerichtet ist und durch welches ein Drehmoment des ersten Rotors (R1) variierbar ist; einen zweiten Rotor (R2) welcher im Innenbereich (IB) angeordnet ist und über welchen ein zweites Antriebsrad (Rd2) antreibbar ist, wobei der zweite Rotor (R2) eine zweite Magnetspuleneinrichtung (MS2) oder einen Permanentmagnet (PM) umfasst, mittels dessen ein zweites Rotormagnetfeld (B2) erzeugbar ist und welches an das Statormagnetfeld (B) ankoppelnd ausgerichtet ist; und eine Steuereinrichtung (SE), welche dazu eingerichtet ist, das Statormagnetfeld (B) und das erste Rotormagnetfeld (B1) und/oder das zweite Rotormagnetfeld (B2) basierend auf einer Vorgabe für ein erstes Drehmoment (M1) für den ersten Rotor (R1) und für ein zweites Drehmoment (M2) für den zweiten Rotor (R2) einzustellen.

## Beschreibung

Die vorliegende Erfindung betrifft eine elektrische Maschine für einen Traktionsantrieb und ein Verfahren zum Betreiben einer elektrischen Maschine.

### Stand der Technik

Herkömmliche Elektrofahrzeuge umfassen meist lediglich einen elektrischen Antrieb pro Achse und ein Differential zur Verteilung des Drehmoments, was auch zum Ausgleich von verschiedenen Raddrehzahlen bei einer Kurvenfahrt dienen kann. Da derartige Lösungen sich meist durch geringe Kosten auszeichnen können, werden diese meist bei neuen Konstruktionen (Antrieben) eingesetzt. Für Hochleistungssportwagen gibt es bereits vier Einzelradantriebe, wodurch ein Torque-Vectoring ermöglicht wird, und auf ein Differential verzichtet werden kann. Solche Lösungen sind allerdings nur für wenige Fahrzeuge in Serie vorgesehen, da hierbei die Kosten hoch ausfallen können.

In der WO 2013/083243 A1 wird ein Antriebsstrang eines allradbetreibbaren Fahrzeugs beschrieben, mit einer ersten Achse und einer zweiten Achse und zwei elektrischen Maschinen, wobei jede Maschine eine der Achshälften antreibt.

### Offenbarung der Erfindung

Die vorliegende Erfindung schafft eine elektrische Maschine für einen Traktionsantrieb nach Anspruch 1 und ein Verfahren zum Betreiben einer elektrischen Maschine nach Anspruch 8.

Bevorzugte Weiterbildungen sind Gegenstand der Unteransprüche.

### Vorteile der Erfindung

Die der vorliegenden Erfindung zugrundeliegende Idee besteht darin, eine elektrische Maschine für einen Traktionsantrieb und ein Verfahren zum Betreiben einer elektrischen Maschine anzugeben, bei welchem eine Einzelradsteuerung des dortigen Drehmoments möglich ist. Des Weiteren ist eine kostengünstige Lösung von Einzelradantrieben an einer Achse beabsichtigt, wodurch ein Torque-Vectoring ermöglicht werden kann und dabei möglichst viele Gleichteile nur einmal in dem Antriebsaufbau und/oder der Maschine bereitgestellt werden müssen.

Erfindungsgemäß umfasst die elektrische Maschine ein Gehäuse umfassend einen Stator mit einem Innenbereich, in welchem ein Statormagnetfeld erzeugbar ist; einen ersten Rotor, welcher im Innenbereich angeordnet ist und über welchen ein erstes Antriebsrad antreibbar ist, wobei der erste Rotor eine erste Magnetspuleneinrichtung umfasst, mittels welcher ein erstes Rotormagnetfeld erzeugbar ist, welches an das Statormagnetfeld ankoppelnd ausgerichtet ist und durch welches ein Drehmoment des ersten Rotors variierbar ist. Des Weiteren umfasst die Maschine einen zweiten Rotor, welcher im Innenbereich angeordnet ist und über welchen ein zweites Antriebsrad antreibbar ist, wobei der zweite Rotor eine zweite Magnetspuleneinrichtung oder einen Permanentmagnet umfasst, mittels dessen ein zweites Rotormagnetfeld erzeugbar ist, welches an das Statormagnetfeld ankoppelnd ausgerichtet ist. Des Weiteren umfasst die Maschine eine Steuereinrichtung, welche dazu eingerichtet ist, das Statormagnetfeld und das erste Rotormagnetfeld und/oder das zweite Rotormagnetfeld basierend auf einer Vorgabe für ein erstes Drehmoment für den ersten Rotor und für ein zweites Drehmoment für den zweiten Rotor einzustellen.

Der Stator und die Rotoren können hierbei vorteilhaft als Gleichteile lediglich einmal für den gesamten Antrieb an einer Achse bereitgestellt werden, wodurch Kosten in der Herstellung einsparbar sind und Stückzahleffekte genutzt werden können und Komponentenkosten gespart werden können.

Der zweite Rotor kann also entweder eine zweite Magnetspuleneinrichtung oder einen Permanentmagnet, oder mehrere, umfassen, durch welche ein zweites Rotormagnetfeld erzeugt wird. Der Wortlaut des Ankoppelns des Statormagnetfelds an das Rotormagnetfeld oder umgekehrt beschreibt vorteilhaft, dass dich beide Magnetfelder räumlich überlagern können und miteinander wechselwirken können. Durch ein derartiges Wechselwirken kann vorteilhaft eine Kraft auf den Rotor, welche das Drehmoment bewirkt, erzeugt und variiert werden. Im Gegensatz zu den Magnetspuleneinrichtungen (erste und zweite) kann der Permanentmagnet lediglich ein konstantes zweites Rotormagnetfeld erzeugen. Die Steuerung des zweiten Drehmoments erfolgt dann vorteilhaft ausschließlich durch eine Steuerung (Variieren) des Stattormagnetfelds. Da jedoch zumindest einer der Rotoren eine Magnetspuleneinrichtung umfasst, an welcher das Drehmoment auch über das Rotormagnetfeld variiert werden kann, da dieses selbst variabel ist, kann vorteilhaft das erste Drehmoment unterschiedlich vom zweiten Drehmoment eingestellt werden (Torque-Vectoring an zwei Rädern).

Die Vorgabe für die Drehmomente entspricht vorteilhaft einer Vorgabe für ein Fahrverhalten, oder einem Eingriff für eine Sicherheitsmaßnahme, etwa bei Kurvenfahrten, durch eine Computereinheit, insbesondere durch die Steuereinrichtung.

Derartige getrennte Radantriebe ermöglichen eine unterschiedliche Drehmomentsteuerung an den Rädern einer Achse, vorteilhaft ein Torque-Vectoring. Die Drehmomentverteilung kann hierbei optimal gewählt werden, etwa von einer Steuereinrichtung, wie es der jeweiligen Fahrsituation gerade entspricht. Vorteilhaft kann auf eine zweite elektrische Maschine verzichtet werden, da die gleiche Maschine mit den beiden Rotoren nur einen Stator und ein Statormagnetfeld und vorteilhaft weitere Bauteile, etwa Wechselrichter, Inverter und weiteres lediglich nur in einmaliger Ausführung benötigen kann.

Durch die Drehmomentsteuerung kann auf ein Differential verzichtet werden, und ein Getriebe kann an einer oder jeder Rotorwelle vorhanden sein oder es kann darauf verzichtet werden.

Unterschiedliche Drehmomente in den Rotoren werden vorteilhaft durch unterschiedliche Erregungen in den Rotoren erzeugt.

Gemäß einer bevorzugten Ausführungsform der elektrischen Maschine umfasst der zweite Rotor einen Permanentmagnet, mittels welchem ein konstantes zweites Rotormagnetfeld erzeugbar ist.

Gemäß einer bevorzugten Ausführungsform der elektrischen Maschine ist die Steuereinrichtung dazu eingerichtet, das erste Drehmoment und das zweite Drehmoment gleich oder unterschiedlich voneinander einzustellen.

Gemäß einer bevorzugten Ausführungsform der elektrischen Maschine umfasst die erste Magnetspuleneinrichtung einen Schleifring, wobei mittels der Steuereinrichtung das erste Rotormagnetfeld durch einen Schleifringstrom erzeugbar und steuerbar ist.

Die Höhe des Schleifringstroms kann die Erregung des Rotors und somit das Drehmoment der Maschine bestimmen.

Gemäß einer bevorzugten Ausführungsform der elektrischen Maschine umfasst die erste Magnetspuleneinrichtung eine erste elektrische Schnittstelle, mittels welcher die erste Magnetspuleneinrichtung mit der Steuereinrichtung verbindbar ist.

Gemäß einer bevorzugten Ausführungsform der elektrischen Maschine umfasst die zweite Magnetspuleneinrichtung einen Schleifring, wobei mittels der Steuereinrichtung das zweite Rotormagnetfeld durch einen Schleifringstrom erzeugbar und steuerbar ist.

Gemäß einer bevorzugten Ausführungsform der elektrischen Maschine umfasst die zweite Magnetspuleneinrichtung eine zweite elektrische Schnittstelle, mittels welcher die zweite Magnetspuleneinrichtung mit der Steuereinrichtung verbindbar ist.

Erfindungsgemäß erfolgt bei dem Verfahren zum Betreiben einer erfindungsgemäßen elektrischen Maschine ein Erzeugen eines Statormagnetfelds im Innenbereich durch den Stator mittels eines Ansteuerns des Stators durch eine Steuereinrichtung; ein Erzeugen eines ersten Rotormagnetfelds mit einer erste Magnetspuleneinrichtung am ersten Rotor derart, dass bei einer Kopplung des ersten Rotormagnetfelds mit dem Statormagnetfeld ein erstes Drehmoment am ersten Rotor entsprechend einer Vorgabe erzeugt wird, wobei die erste Magnetspuleneinrichtung durch die Steuereinrichtung gesteuert wird. Des Weiteren erfolgt ein Erzeugen eines zweiten Rotormagnetfelds am zweiten Rotor mit einem Permanentmagneten derart, dass das zweite Rotormagnetfeld mit dem Statormagnetfeld koppelbar ausgerichtet ist und durch das Statormagnetfeld ein zweites Drehmoment am zweiten Rotor entsprechend einer Vorgabe erzeugt wird oder ein Erzeugen eines zweiten Rotormagnetfelds am zweiten Rotor mit einer zweiten Magnetspuleneinrichtung am zweiten Rotor derart, dass bei einer Kopplung des zweiten Rotormagnetfelds mit dem Statormagnetfeld ein zweites Drehmoment entsprechend einer Vorgabe erzeugt wird, wobei die zweite Magnetspuleneinrichtung durch die Steuereinrichtung gesteuert wird; und ein Antreiben eines ersten Rads mit dem ersten Rotor und eines zweiten Rads mit dem zweiten Rotor.

Gemäß einer bevorzugten Ausführung des Verfahrens wird das erste Drehmoment gleich oder unterschiedlich zum zweiten Drehmoment eingestellt oder verändert.

Gemäß einer bevorzugten Ausführung des Verfahrens wird das erste Rotormagnetfeld über einen Schleifringstrom an der ersten Magnetspuleneinrichtung erzeugt und gesteuert und/oder das zweite Rotormagnetfeld wird über einen Schleifringstrom an der zweiten Magnetspuleneinrichtung erzeugt und gesteuert.

Gemäß einer bevorzugten Ausführung des Verfahrens wird eine Vorgabe für das erste Drehmoment und für das zweite Drehmoment durch die Steuereinrichtung entsprechend eines zu vollziehenden Fahrmanövers ermittelt und vorgegeben.

Das Verfahren zeichnet sich weiterhin auch durch die bereits in Verbindung mit der elektrischen Maschine genannten Merkmale und Vorteile aus und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:
- Fig. 1: eine schematische Darstellung einer elektrischen Maschine für einen Traktionsantrieb gemäß eines Ausführungsbeispiels der vorliegenden Erfindung;
- Fig. 2: eine schematische Darstellung einer elektrischen Maschine für einen Traktionsantrieb gemäß eines weiteren Ausführungsbeispiels der vorliegenden Erfindung
- Fig. 3: eine schematische Darstellung einer elektrischen Maschine in einer Antriebsachse; und
- Fig. 4: eine Blockdarstellung der Verfahrensschritte gemäß der vorliegenden Erfindung.

In den Figuren bezeichnen gleiche Bezugszeichen gleiche bzw.
funktionsgleiche Elemente.

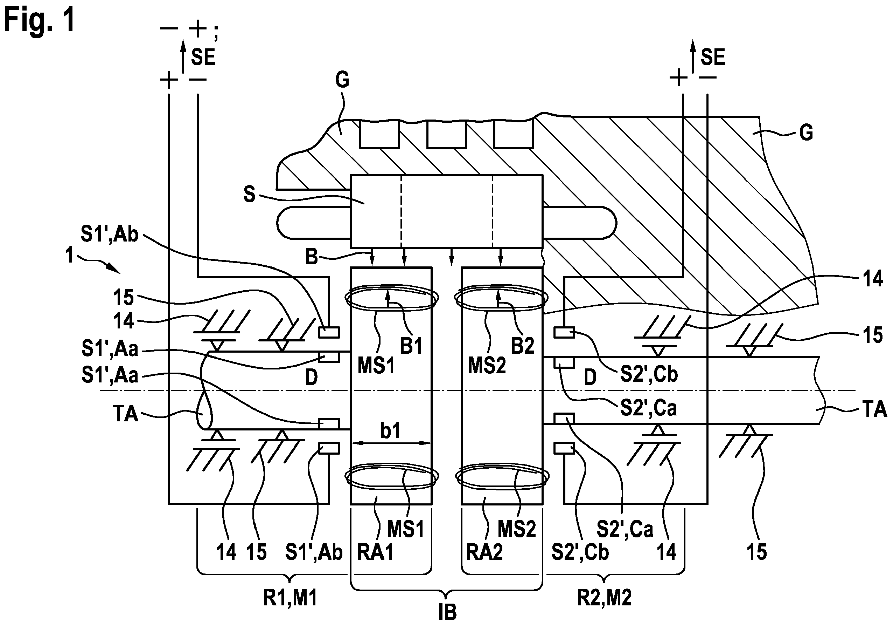

Fig. 1 zeigt eine schematische Darstellung einer elektrischen Maschine für einen Traktionsantrieb gemäß eines Ausführungsbeispiels der vorliegenden Erfindung.

Die elektrische Maschine 1 für einen Traktionsantrieb TA umfasst ein Gehäuse G. Die elektrische Maschine 1 umfasst weiterhin einen Stator S mit einem Innenbereich IB, in welchem ein Statormagnetfeld B erzeugbar ist, vorteilhaft von einer Spule. Die elektrische Maschine 1 umfasst weiterhin einen ersten Rotor Rl, welcher vorteilhaft einen ersten Anker RA1 umfassen kann, welcher im Innenbereich IB angeordnet ist und über welchen ein erstes Antriebsrad Rdl antreibbar ist, wobei der erste Rotor R1 eine erste Magnetspuleneinrichtung MS1 umfasst, mittels welcher ein erstes Rotormagnetfeld B1 erzeugbar ist, welches an das Statormagnetfeld B ankoppelnd ausgerichtet ist und durch welches ein Drehmoment des ersten Rotors R1 variierbar ist. Die elektrische Maschine 1 umfasst weiterhin einen zweiten Rotor R2, vorteilhaft mit einem zweiten Anker RA2, welcher im Innenbereich IB angeordnet ist und über welchen ein zweites Antriebsrad Rd2 antreibbar ist, wobei der zweite Rotor R2 eine zweite Magnetspuleneinrichtung MS2 umfasst, mittels dessen ein zweites Rotormagnetfeld B2 erzeugbar ist und welches an das Statormagnetfeld B ankoppelnd ausgerichtet ist. Die elektrische Maschine 1 umfasst weiterhin eine Steuereinrichtung SE, welche dazu eingerichtet ist, das Statormagnetfeld B und das erste Rotormagnetfeld B1 und/oder das zweite Rotormagnetfeld B2 basierend auf einer Vorgabe für ein erstes Drehmoment Ml für den ersten Rotor R1 und für ein zweites Drehmoment M2 für den zweiten Rotor R2 einzustellen.

Die erste Magnetspuleneinrichtung MS1 kann eine Schnittstelle S1' für einen Schleifring, vorteilhaft eine erste Schnittstelle für einen ersten Schleifring, umfassen. Die erste Schnittstelle S1' kann mit der Steuereinrichtung SE verbunden sein und mittels der Steuereinrichtung SE kann das erste Rotormagnetfeld B1 durch einen Schleifringstrom erzeugbar und steuerbar sein. Die erste Schnittstelle S1' kann einen ersten elektrischen Kontakt Aa (etwa Ringkontakt) an dem ersten Rotor R1 umfassen und einen zweiten elektrischen Kontakt Ab (etwa als Kohlebürste) in der Nähe des ersten Rotors R1 umfassen, vorteilhaft neben dem ersten Anker RA1 und dem ersten Kontakt Aa gegenüber. Der zweite Kontakt Ab umfasst vorteilhaft zwei Kontakte, vorteilhaft an gegenüberliegenden Seiten des ersten Rotors Rl, welche mit einer unterschiedlichen elektrischen Polung verschaltet sein können. Die Polung kann von der Steuereinrichtung SE vorgegeben und mit dieser verschaltet sein.

Die zweite Magnetspuleneinrichtung MS2 kann eine Schnittstelle S2' für einen Schleifring, vorteilhaft eine zweite Schnittstelle, für einen zweiten Schleifring, umfassen. Die zweite Schnittstelle S2' kann mit der Steuereinrichtung SE verbunden sein und mittels der Steuereinrichtung SE kann das zweite Rotormagnetfeld B2 durch einen Schleifringstrom erzeugbar und steuerbar sein. Die zweite Schnittstelle S2' kann einen dritten elektrischen Kontakt Ca (etwa als Ringkontakt) an dem zweiten Rotor R2 umfassen und einen vierten elektrischen Kontakt Cb (etwa als Kohlebürste) in der Nähe des zweiten Rotors R2 umfassen, vorteilhaft neben dem zweiten Anker RA2 und dem dritten Kontakt gegenüber. Der vierte Kontakt umfasst vorteilhaft zwei Kontakte, vorteilhaft an gegenüberliegenden Seiten des zweiten Rotors R2, welche mit einer unterschiedlichen elektrischen Polung verschaltet sein können. Die Polung kann vorteilhaft umgekehrt zu der Polung des ersten Schleifrings S1' oder gleich dieser sein. Die Polung kann von der Steuereinrichtung SE vorgegeben und mit dieser verschaltet sein. Die Schnittstellen S1' und S2' können elektrische Kontakte, vorteilhaft mit Kohlebürsten, umfassen.

Der erste Kontakt Aa und der dritte Kontakt Ca können vorteilhaft als eine Schnittstelle ausgeformt sein und durch die Steuereinrichtung SE kontaktiert und angesteuert werden.

Die erste und/oder zweite Magnetspuleneinrichtung MS1 und/oder MS2 umfassen vorteilhaft jeweils eine Spule mit zumindest einer Wicklung im Anker des jeweiligen Rotors.

Der erste und der zweite Rotor können vorteilhaft jeweils mit einem Festlager 15 und einem Loslager 14 gelagert sein. Der erste Anker RA1 und/oder der zweite Anker RA2 können vorteilhaft eine Breite b2 umfassen, welche innerhalb des Innenbereichs IB angeordnet sein kann. Der erste Anker RA1 und der zweite Anker RA2 können eine gleiche Breite umfassen oder unterschiedlich sein. Das Gehäuse G fasst vorteilhaft den Stator S sowie dessen Innenbereich IB, die Schleifringe und deren elektrische Zuleitungen von der Steuereinrichtung SE, in das Gehäuse G ein.

Gegenüber einer herkömmlichen elektrischen Maschine in einem Traktionsantrieb kann ein Torque-Vectoring erzielt werden, wobei vorteilhaft nur ein Stator und ein geringer Mehraufwand (Steuerung des Schleifringstroms) bei den Rotoren nötig ist. Das erste und das zweite Drehmoment kann mit Hilfe des Schleifringstroms und/oder der Variation des Statormagnetfelds sehr einfach kontinuierlich und dynamisch verändert werden.

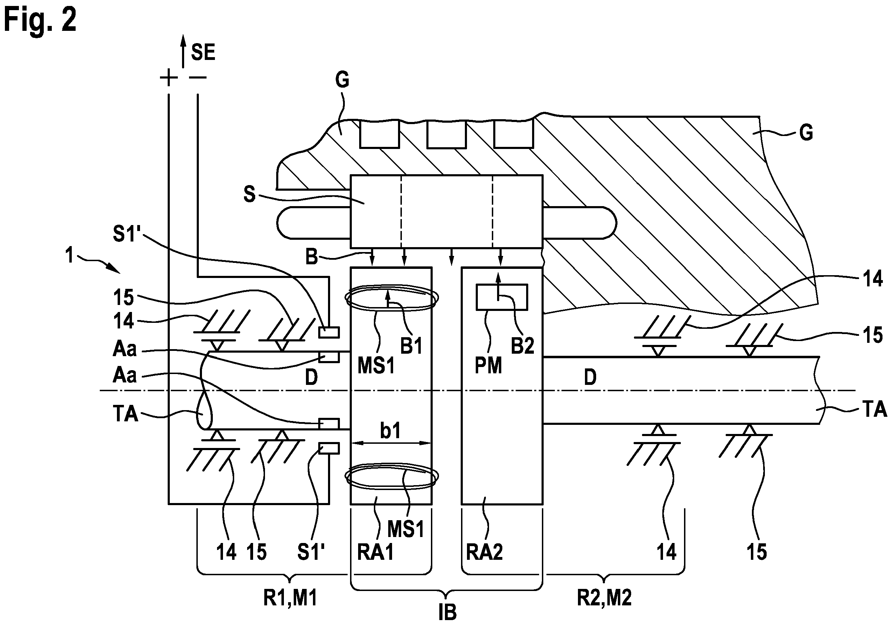

Fig. 2 zeigt eine schematische Darstellung einer elektrischen Maschine für einen Traktionsantrieb gemäß eines weiteren Ausführungsbeispiels der vorliegenden Erfindung.

Die elektrische Maschine 1 der Fig. 2 unterscheidet sich lediglich dadurch, dass der zweite Rotor R2 anstatt der zweiten Magnetspuleneinrichtung einen Permanentmagnet PM umfasst, durch welchen das zweite Rotormagnetfeld B2 erzeugt werden kann und mit dem Statormagetfeld B koppeln kann. Da das zweite Magnetfeld B2 dann konstant ist, kann das zweite Drehmoment M2 lediglich durch eine Variation des Statormagnetfelds B gesteuert und verändert werden. Dieses kann sich aber von ersten Drehmoment Ml unterscheiden, da das erste Drehmoment Ml zusätzlich noch von der Variation des ersten Rotormagnetfeldes B1 abhängt. Dadurch kann an Torque-Vectoring an den beiden Antriebsrädern erzeugt werden. Die Anordnung eines zweiten Schleifrings am zweiten Rotor entfällt vorteilhaft.

Der zumindest eine Permanentmagnet PM kann im Inneren des zweiten Ankers RA2 oder außen an diesem angeordnet sein. Die Steuereinrichtung SE kann Teil einer Fahrzeugelektronik sein und mit einem Bordnetz verbunden sein.

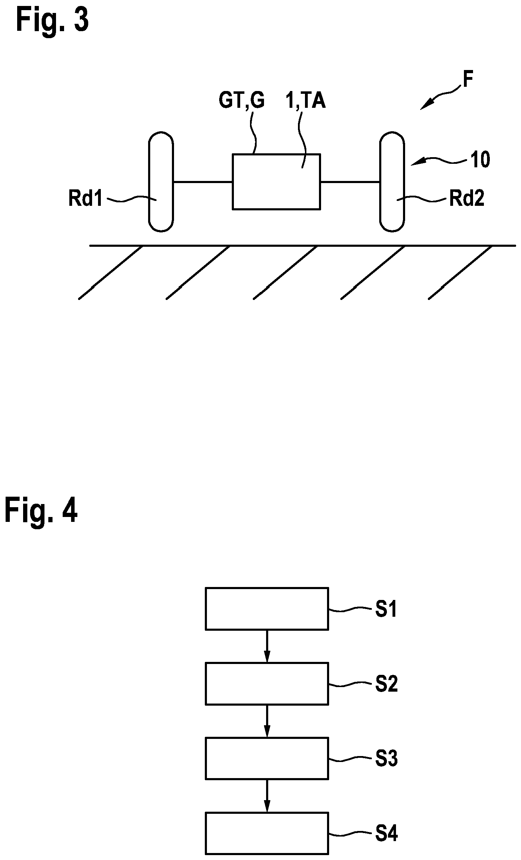

Fig. 3 zeigt eine schematische Darstellung einer elektrischen Maschine in einer Antriebsachse.

Die elektrische Maschine 1 kann in einem Gehäuse G angeordnet sein und vorteilhaft selbst eine elektrische Achse für den Traktionsantrieb TA bilden, mit anderen Worten eine Antriebseinrichtung 10. Des Weiteren kann ein Getriebe GT in der elektrischen Achse verbaut sein und mit zumindest einem der Antriebsräder Rdl oder Rd2 verbunden sein. Die elektrische Achse kann in einem Fahrzeug F umfasst sein. Die beiden Räder Rdl und Rd2 können mit Torque-Vectoring, also unterschiedlichen Drehmomenten, von der Antriebseinrichtung 10 angesteuert werden. Die elektrische Maschine 1, das Getriebe GT und weitere Gleichteile können in einem Gehäuse G angeordnet sein.

Fig. 4 zeigt eine Blockdarstellung der Verfahrensschritte gemäß der vorliegenden Erfindung.

Bei dem Verfahren zum Betreiben einer erfindungsgemäßen elektrischen Maschine erfolgt ein Erzeugen (S1) eines Statormagnetfelds im Innenbereich durch den Stator mittels eines Ansteuerns des Stators durch eine Steuereinrichtung; ein Erzeugen (S2) eines ersten Rotormagnetfelds mit einer ersten Magnetspuleneinrichtung am ersten Rotor derart, dass bei einer Kopplung des ersten Rotormagnetfelds mit dem Statormagnetfeld ein erstes Drehmoment am ersten Rotor entsprechend einer Vorgabe erzeugt wird, wobei die erste Magnetspuleneinrichtung durch die Steuereinrichtung gesteuert wird; ein Erzeugen (S3) eines zweiten Rotormagnetfelds am zweiten Rotor mit einem Permanentmagneten derart, dass das zweite Rotormagnetfeld mit dem Statormagnetfeld koppelbar ausgerichtet ist und durch das Statormagnetfeld ein zweites Drehmoment am zweiten Rotor entsprechend einer Vorgabe erzeugt wird oder ein Erzeugen (S3) eines zweiten Rotormagnetfelds am zweiten Rotor mit einer zweiten Magnetspuleneinrichtung am zweiten Rotor derart, dass bei einer Kopplung des zweiten Rotormagnetfelds mit dem Statormagnetfeld ein zweites Drehmoment entsprechend einer Vorgabe erzeugt wird, wobei die zweite Magnetspuleneinrichtung durch die Steuereinrichtung gesteuert wird; und ein Antreiben (S4) eines ersten Rads mit dem ersten Rotor und eines zweiten Rads mit dem zweiten Rotor.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Elektrische Maschine (1) für einen Traktionsantrieb (TA) mit einem Gehäuse (G), umfassend
- einen Stator (S) mit einem Innenbereich (IB), in welchem ein Statormagnetfeld (B) erzeugbar ist;
- einen ersten Rotor (R1), welcher im Innenbereich (IB) angeordnet ist und über welchen ein erstes Antriebsrad (Rdl) antreibbar ist, wobei der erste Rotor (R1) eine erste Magnetspuleneinrichtung (MS1) umfasst, mittels welcher ein erstes Rotormagnetfeld (B1) erzeugbar ist, welches an das Statormagnetfeld (B) ankoppelnd ausgerichtet ist und durch welches ein Drehmoment des ersten Rotors (R1) variierbar ist;
- einen zweiten Rotor (R2), welcher im Innenbereich (IB) angeordnet ist und über welchen ein zweites Antriebsrad (Rd2) antreibbar ist, wobei der zweite Rotor (R2) eine zweite Magnetspuleneinrichtung (MS2) oder einen Permanentmagnet (PM) umfasst, mittels welchem ein zweites Rotormagnetfeld (B2) erzeugbar ist welches an das Statormagnetfeld (B) ankoppelnd ausgerichtet ist; und
- eine Steuereinrichtung (SE), welche dazu eingerichtet ist, das Statormagnetfeld (B) und das erste Rotormagnetfeld (B1) und/oder das zweite Rotormagnetfeld (B2) basierend auf einer Vorgabe für ein erstes Drehmoment (M1) für den ersten Rotor (R1) und für ein zweites Drehmoment (M2) für den zweiten Rotor (R2) einzustellen.

2. Elektrische Maschine (1) nach Anspruch 1, bei welcher der zweite Rotor (R2) einen Permanentmagnet (PM) umfasst, mittels welchem ein konstantes zweites Rotormagnetfeld (B2) erzeugt wird.

3. Elektrische Maschine (1) nach Anspruch 1 oder 2, bei welcher die Steuereinrichtung (SE) dazu eingerichtet ist, das erste Drehmoment (M1) und das zweite Drehmoment (M2) gleich oder unterschiedlich voneinander einzustellen.

4. Elektrische Maschine (1) nach einem der Ansprüche 1 bis 3, bei welcher die erste Magnetspuleneinrichtung (MS1) einen Schleifring umfasst und mittels der Steuereinrichtung (SE) das erste Rotormagnetfeld (B1) durch einen Schleifringstrom erzeugbar und steuerbar ist.

5. Elektrische Maschine (1) nach Anspruch 4, bei welcher die erste Magnetspuleneinrichtung (MS1) eine erste elektrische Schnittstelle (S1) umfasst, mittels welcher die erste Magnetspuleneinrichtung (MS1) mit der Steuereinrichtung (SE) verbindbar ist.

6. Elektrische Maschine (1) nach Anspruch 3 bis 5, soweit rückbezogen auf Anspruch 1, bei welcher die zweite Magnetspuleneinrichtung (MS2) einen Schleifring umfasst und mittels der Steuereinrichtung (SE) das zweite Rotormagnetfeld (B2) durch einen Schleifringstrom erzeugbar und steuerbar ist.

7. Elektrische Maschine (1) nach Anspruch 6, bei welcher die zweite Magnetspuleneinrichtung (MS2) eine zweite elektrische Schnittstelle (S2) umfasst, mittels welcher die zweite Magnetspuleneinrichtung (MS2) mit der Steuereinrichtung (SE) verbindbar ist.

8. Verfahren zum Betreiben einer elektrischen Maschine nach einem der Ansprüche 1 bis 7, umfassend die Schritte:
- Erzeugen (S1) eines Statormagnetfelds (B) im Innenbereich (IB) durch den Stator (S) mittels eines Ansteuerns des Stators (S) durch eine Steuereinrichtung (SE);
- Erzeugen (S2) eines ersten Rotormagnetfelds (B1) mit einer ersten Magnetspuleneinrichtung (MS1) am ersten Rotor (R1) derart, dass bei einer Kopplung des ersten Rotormagnetfelds (B1) mit dem Statormagnetfeld (B) ein erstes Drehmoment (M1) am ersten Rotor (R1) entsprechend einer Vorgabe erzeugt wird, wobei die erste Magnetspuleneinrichtung (MS1) durch die Steuereinrichtung (SE) gesteuert wird;
- Erzeugen (S3) eines zweiten Rotormagnetfelds (B2) am zweiten Rotor (R2) mit einem Permanentmagneten (PM) derart, dass das zweite Rotormagnetfeld (B2) mit dem Statormagnetfeld (B) koppelbar ausgerichtet ist und durch das Statormagnetfeld (B) ein zweites Drehmoment (M2) am zweiten Rotor (R2) entsprechend einer Vorgabe erzeugt wird oder Erzeugen (S3) eines zweiten Rotormagnetfelds (B2) am zweiten Rotor (R2) mit einer zweiten Magnetspuleneinrichtung (MS2) am zweiten Rotor (R2) derart, dass bei einer Kopplung des zweiten Rotormagnetfelds (B2) mit dem Statormagnetfeld (B) ein zweites Drehmoment (M2) entsprechend einer Vorgabe erzeugt wird, wobei die zweite Magnetspuleneinrichtung (MS2) durch die Steuereinrichtung (SE) gesteuert wird; und
- Antreiben (S4) eines ersten Rads (Rdl) mit dem ersten Rotor (R1) und eines zweiten Rads (Rd2) mit dem zweiten Rotor (R2).

9. Verfahren nach Anspruch 8, bei welchem das erste Drehmoment (M1) gleich oder unterschiedlich zum zweiten Drehmoment (M2) eingestellt oder verändert wird.

10. Verfahren nach Anspruch 8 oder 9, bei welchem das erste Rotormagnetfeld (B1) über einen Schleifringstrom an der ersten Magnetspuleneinrichtung (MS1) erzeugt und gesteuert wird und/oder das zweite Rotormagnetfeld (B2) über einen Schleifringstrom an der zweiten Magnetspuleneinrichtung (MS2) erzeugt und gesteuert wird.

11. Verfahren nach einem der Ansprüche 8 bis 10, bei welchem eine Vorgabe für das erste Drehmoment (M1) und für das zweite Drehmoment (M2) durch die Steuereinrichtung (SE) entsprechend eines zu vollziehenden Fahrmanövers ermittelt und vorgegeben wird.
